# EUROPEAN PATENT APPLICATION

(11) **EP 4 177 014 A1**
(43) Date of publication of application: **10.05.2023**
(21) Application number: 21877875.1
(22) Date of filing: 15.09.2021
(51) Int. Cl.: B25J 9/16, B25J 19/00, B60L 58/18, B60L 58/12

(54) **ROBOT AND CONTROL METHOD THEREFOR**

(30) Priority: 07.10.2020 KR 20200129352
(71) Applicant: Samsung Electronics Co., Ltd., Gyeonggi-do 16677 (KR)
(72) Inventor: KIM, Minkuk, Suwon-si Gyeonggi-do 16677 (KR)
(74) Representative: Appleyard Lees IP LLP
(86) International application number: PCT/KR2021/012589
(87) International publication number: WO 2022/075623

(57) **Abstract**

A robot and a control method therefor are disclosed. The robot may comprise: a plurality of batteries; a first switch for individually supplying, to the plurality of batteries, electric energy provided from an external charger; a second switch for connecting the plurality of batteries; and a processor for controlling the first switch such that, when the external charger is connected to the robot, some of the plurality of batteries are charged on the basis of the SOCs (states of charge) of the plurality of batteries, and then the remaining batteries are charged, and controlling the second switch such that, after the connection with the external charger is disconnected, when a difference in the SOCs of the plurality of batteries reaches a threshold according to the operation of the robot, a battery having a high SOC from among the plurality of batteries charges a battery having a low SOC.

## Description

### [Technical Field]

The disclosure relates to a robot and a control method therefor, and more particularly, to a robot including a plurality of batteries, and a control method therefor.

### [CROSS-REFERENCE TO RELATED APPLICATIONS]

This application is based on and claims priority of a Korean patent application number 10-2020-0129352, filed on October 7, 2020, in the Korean Intellectual Property Office, the disclosure of which is incorporated by reference herein in its entirety.

### [Description of the Related Art]

A conventional robot charged a plurality of batteries included in the robot simultaneously, when an external charger was connected. However, a plurality of batteries may have different discharge times according to their uses, and accordingly, each battery may have a different state of charge (SOC) on a time point when an external charger is connected. As above, in the case of charging a plurality of batteries simultaneously while the plurality of batteries have different SOCs, charge of a battery having a high SOC is completed earlier than a battery having a low SOC. In this case, even though the battery having a low SOC is not completely charged, the battery manage system (BMS) stops charge as the battery having a high SOC is fully charged. This ultimately brings a result that the operation time of the robot is reduced.

Meanwhile, as described above, a plurality of batteries have different discharge times according to their uses, and thus some batteries among the plurality of batteries may be discharged earlier than the other batteries according to operation of the robot. In case any one battery is discharged as above, the plurality of batteries should be charged for operation of the robot, even though the remaining batteries are not discharged. Accordingly, there is a need to increase the operation time of the robot, and resolve user inconvenience that may occur due to frequent charge by delaying the discharge times of the plurality of batteries included in the robot.

### [Detailed Description of the Invention]

### [Technical Task]

The disclosure was devised for addressing the aforementioned need, and the purpose of the disclosure is in providing a robot which individually charges a plurality of batteries when connected to an external charger, and wherein some of the plurality of batteries charge some other batteries while the robot is operating after connection with the external charger is disconnected, and a control method therefor.

### [Technical Solution]

A robot according to an embodiment of the disclosure may include a plurality of batteries, a first switch for individually supplying electric energy provided from an external charger to the plurality of batteries, a second switch for connecting the plurality of batteries, and a processor configured to, based on the external charger being connected to the robot, control the first switch such that some batteries among the plurality of batteries are charged on the basis of the states of charge (SOCs) of the plurality of batteries, and then the remaining batteries are charged, and after the connection with the external charger is disconnected, based on a difference in the SOCs among the plurality of batteries reaching a threshold according to the operation of the robot, control the second switch such that a battery having a high SOC among the plurality of batteries charges a battery having a low SOC.

The processor may receive SOC information of each battery from the plurality of batteries, and based on the SOC information, control the first switch such that a first battery and the external charger are connected in order to first charge the first battery having a low SOC among the plurality of batteries, and after the first battery is charged, control the first switch such that a second battery and the external charger are connected in order to charge the second battery having a higher SOC than the first battery.

The processor may, based on the first battery being charged to a predetermined SOC by a constant current (CC) charge method, control the first switch such that the second battery and the external charger are connected.

The processor may, based on the second battery being charged to the predetermined SOC by the CC charge method, control the first switch such that the first battery and the external charger are connected, and charge the first battery by a constant voltage (CV) charge method, and based on the first battery being fully charged by the CV charge method, control the first switch such that the second battery and the external charger are connected, and fully charge the second battery by the CV charge method.

The processor may, while the robot is operating, receive SOC information from the plurality of batteries, and determine the difference in the SOCs of the plurality of batteries based on the SOC information.

The processor may, based on the difference in the SOCs of the plurality of batteries reaching a predetermined value as the battery having a high SOC among the plurality of batteries charges the battery having a low SOC, control the second switch to disconnect the connection among the plurality of batteries.

The plurality of batteries may, based on a current of a size greater than or equal to a predetermined value flowing, perform an overcurrent protection function, and the threshold may be set to the robot such that the size of the current flowing from the battery having a high SOC to the battery having a low SOC is a size smaller than the predetermined value.

Some batteries among the plurality of batteries may be batteries for supplying electric energy to a motor of the robot, and the remaining batteries may be batteries for supplying electric energy to the processor.

Meanwhile, a control method for a robot according to an embodiment of the disclosure may include the steps of, based on an external charger being connected to the robot, controlling the first switch such that some batteries among the plurality of batteries are charged on the basis of the states of charge (SOCs) of the plurality of batteries, and then the remaining batteries are charged, and after the connection with the external charger is disconnected, based on a difference in the SOCs among the plurality of batteries reaching a threshold according to the operation of the robot, controlling the second switch such that a battery having a high SOC among the plurality of batteries charges a battery having a low SOC.

In the step of controlling the first switch, SOC information of each battery may be received from the plurality of batteries, and based on the SOC information, the first switch may be controlled such that a first battery and the external charger are connected in order to first charge the first battery having a low SOC among the plurality of batteries, and after the first battery is charged, the first switch may be controlled such that a second battery and the external charger are connected in order to charge the second battery having a higher SOC than the first battery.

In the step of controlling the first switch, based on the first battery being charged to a predetermined SOC by a constant current (CC) charge method, the first switch may be controlled such that the second battery and the external charger are connected.

In the step of controlling the first switch, based on the second battery being charged to the predetermined SOC by the CC charge method, the first switch may be controlled such that the first battery and the external charger are connected, and the first battery may be charged by a constant voltage (CV) charge method, and based on the first battery being fully charged by the CV charge method, the first switch may be controlled such that the second battery and the external charger are connected, and the second battery may be fully charged by the CV charge method.

The control method may further include the step of, while the robot is operating, receiving SOC information from the plurality of batteries, and determining the difference in the SOCs of the plurality of batteries based on the SOC information.

In the step of controlling the second switch, based on the difference in the SOCs of the plurality of batteries reaching a predetermined value as the battery having a high SOC among the plurality of batteries charges the battery having a low SOC, the second switch may be controlled to disconnect the connection among the plurality of batteries.

The plurality of batteries may, based on a current of a size greater than or equal to a predetermined value flowing, perform an overcurrent protection function, and the threshold may be set to the robot such that the size of the current flowing from the battery having a high SOC to the battery having a low SOC is a size smaller than the predetermined value.

Some batteries among the plurality of batteries may be batteries for supplying electric energy to a motor of the robot, and the remaining batteries may be batteries for supplying electric energy to the processor.

### [Effect of the Invention]

According to the various embodiments of the disclosure as described above, a robot that can individually charge a plurality of batteries when connected to an external charger and a control method therefor can be provided. In particular, according to the disclosure, the plurality of batteries are individually charged by a CC charge method, and thus the robot can be charged in a state of being capable of operating within a short time.

Also, according to the disclosure, some of the plurality of batteries charge some other batteries while the robot is operating after connection with the external charger is disconnected, and thus the operation time of the robot can be increased, and user inconvenience that may occur due to frequent charge may be resolved.

### [Brief Description of the Drawings]

FIG. 1 is a block diagram for illustrating a robot according to an embodiment of the disclosure;
FIG. 2 is a block diagram for illustrating a robot according to an embodiment of the disclosure;
FIG. 3 is a flow chart for illustrating an embodiment of charging electric energy supplied from an external charger to a plurality of batteries according to an embodiment of the disclosure;
FIG. 4 is a flow chart for illustrating an embodiment wherein some batteries among a plurality of batteries charge some other batteries according to an embodiment of the disclosure;
FIG. 5 is a detailed block diagram for illustrating a robot according to an embodiment of the disclosure; and
FIG. 6 is a flow chart for illustrating a control method for a robot according to an embodiment of the disclosure.

### [Mode for Implementing the Invention]

First, as terms used in this specification and the claims, general terms were selected in consideration of the functions described in the disclosure. However, the terms may vary depending on the intention of those skilled in the art, legal or technical interpretation, or emergence of new technologies, etc. Also, there are terms that were arbitrarily designated by the applicant, and in such cases, the meaning of the terms will be interpreted as defined in this specification. In case there is no specific definition of the terms, the meaning of the terms will be interpreted based on the overall content of the disclosure and common technical knowledge in the pertinent technical field.

Also, in case it is determined that in describing the disclosure, detailed explanation of related known functions or configurations may unnecessarily confuse the gist of the disclosure, the detailed explanation will be abridged or omitted.

Further, while the embodiments of the disclosure will be described in detail with reference to the following accompanying drawings and the content described in the accompanying drawings, it is not intended that the disclosure is restricted or limited by the embodiments.

Hereinafter, the disclosure will be described in detail with reference to the accompanying drawings.

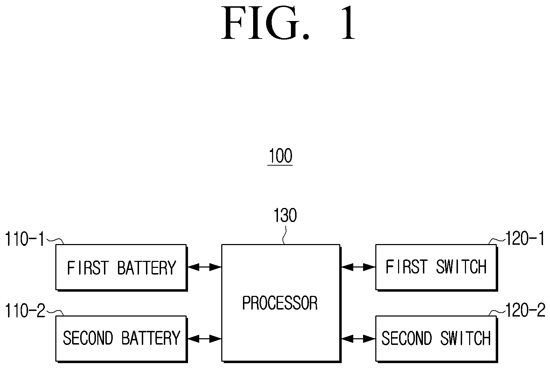

FIG. 1 is a block diagram for illustrating a robot according to an embodiment of the disclosure.

The robot 100 according to an embodiment of the disclosure may be a robot that can drive around spaces inside a building and perform an air purifying task, a housework supporting robot that can drive around spaces inside a home and perform tasks such as organizing clothes, washing dishes, etc., a robot that can perform a demonstration, an explanation, etc. of products inside a store, or a guard robot that can drive around spaces inside a building and perform a guard task, etc.

However, the disclosure is not limited thereto, and the robot 100 may be an autonomous vehicle that can perform driving instead of a person, an automated guided vehicle that can carry a product to a destination, or a robot cleaner that can drive around spaces inside a home and perform a cleaning task. Also, the robot 100 may be implemented as various electronic devices that can perform tasks by using electric energy supplied from batteries such as a smart TV, a smartphone, a computer, a laptop computer, etc.

The robot 100 according to an embodiment of the disclosure may include a plurality of batteries and a plurality of switches. Here, the switches may be field effect transistors (FETs), but are not necessarily limited thereto, and they may be implemented as various switches that can perform connection and disconnection among a plurality of components.

For example, referring to FIG. 1, the robot 100 according to an embodiment of the disclosure may include a first battery 110-1 and a second battery 110-2, and a first switch 120-1 and a second switch 120-2.

Here, each of the plurality of batteries may be connected to different components of the robot 100. As an example, the first battery 110-1 is a battery for operating the system of the robot 100, and it may be connected with a processor 130 and supply electric energy to the processor 130. Also, the second battery 110-2 is, for example, a battery for operating a manipulation unit of the robot 100, and it may be connected to a motor connected to the manipulation unit and supply electric energy to the motor. Here, the manipulation unit may be the robot arm, the robot hand, the robot leg, etc., but is not necessarily limited thereto.

Further, the robot 100 may include the processor 130, which is connected with the first switch 120-1 and controls the first switch 120-1, and is connected with the second switch 120-2 and controls the second switch 120-2.

Here, the first switch 120-1 may be a switch for individually supplying electric energy provided from an external charger to the plurality of batteries, and the second switch 120-2 may be a switch for connecting the plurality of batteries.

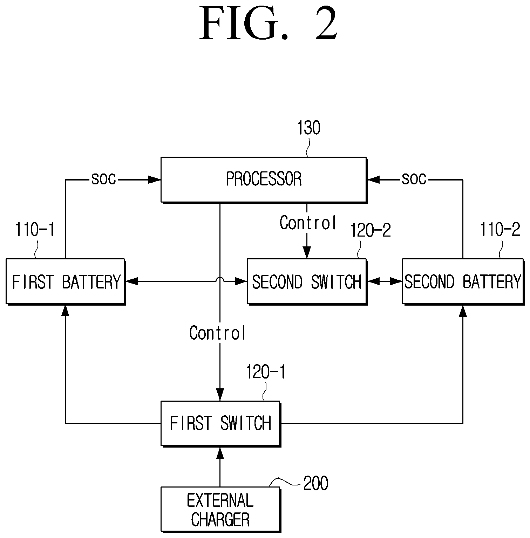

For example, referring to FIG. 2, the first switch 120-1 may be electrically connected with the external charger 200, and may be electrically connected with one of the first battery 110-1 or the second battery 110-2 according to control by the processor 130.

Such a first switch 120-1 may be included in a charge unit of the robot 100. Meanwhile, the charge unit may further include an interface that is for being connected with the external charger 200 and being supplied with an AC power source from the external charger 200, and an AC-DC conversion unit for converting an AC power source supplied from the external charger 200 into a DC power source.

Also, the second switch 120-2 may electrically connect the first battery 110-1 and the second battery 110-2 according to control by the processor 130.

For this, the first end of the second switch 120-2 may be connected to the first battery 110-1, the second end may be connected to the second battery 110-2, and the third end may be connected to the processor 130.

Meanwhile, the battery according to the disclosure is a secondary battery that can be charged, and it may be implemented as a lithium ion battery, a lithium polymer battery, a nickel cadmium battery, a nickel hydrogen battery, a nickel zinc battery, etc., but is not necessarily limited thereto.

The processor 130 controls the overall operations of the robot 100. For this, the processor 130 may include a central processing unit (CPU) or an application processor (AP). Alternatively, the processor 130 may be implemented as at least one of a general processor, a digital signal processor, an application specific integrated circuit (ASIC), a system on chip (SoC), a microcomputer (MICOM), etc.

First, the operation of the processor 130 in case the robot 100 is connected to the external charger 200 will be explained.

When the external charger 200 is connected to the robot 100, the processor 130 may control the first switch 120-1 such that some batteries among the plurality of batteries are charged on the basis of the states of charge (SOCs) of the plurality of batteries, and then the remaining batteries are charged.

For this, the processor 130 may receive SOC information of each battery from the plurality of batteries. Here, the SOC information may be generated by a battery manage system (BMS) included in each battery.

Then, the processor 130 may control the first switch 120-1 such that a battery having a low SOC among the plurality of batteries is charged first, based on the SOC information of each battery received from the plurality of batteries.

As an example, in case the SOC of the first battery 110-1 is lower than the SOC of the second battery 110-2, the processor 130 may control the first switch 120-1 such that the first battery 110-1 and the external charger 200 are connected in order to first charge the first battery 110-1.

Then, after the first battery 110-1 is charged, the processor 130 may control the first switch 120-1 such that the second battery 110-2 and the external charger 200 are connected, for charging the second battery 110-2 having a higher SOC than the first battery 110-1.

In particular, if the first battery 110-1 is charged to a predetermined SOC by a constant current (CC) charge method, the processor 130 may control the first switch 120-1 such that the second battery 110-2 and the external charger 200 are connected.

Here, the CC charge method is a method of outputting a constant current from the external charger 200 to a battery, and in comparison to a constant voltage (CV) charge method applying a constant voltage from the external charger 200 to the battery, the CC charge method can charge a great capacity in the battery in a relatively short time.

Meanwhile, the aforementioned predetermined SOC is the capacity of the battery to be charged by the CC charge method, which may be 70% depending on embodiments, but is not necessarily limited thereto.

For this, while the first battery 110-1 is being charged by the external charger 200, the processor 130 may receive SOC information from the first battery 110-1, and determine the SOC of the first battery 110-1. Then, based on the SOC information received from the first battery 110-1, if it is determined that the SOC of the first battery 110-1 is the predetermined SOC, the processor 130 may control the first switch 120-1 such that the second battery 110-2 and the external charger 200 are connected.

Alternatively, the external charger 200 may charge the first battery 110-1 to the predetermined SOC by the CC charge method, and when the charge by the CC charge method is completed, the external charger 200 may transmit a CC charge completion signal to the processor 130 through an interface of a charge unit (not shown). In this case, when the CC charge completion signal is received from the external charger 200, the processor 130 may control the first switch 120-1 such that the second battery 110-2 and the external charger 200 are connected.

When the first switch 120-1 is switched to the second battery 110-2 according to control by the processor 130, the second battery 110-2 may be connected with the external charger 200, and may be charged to the predetermined SOC by the CC charge method.

Then, when the second battery 110-2 is charged to the predetermined SOC by the CC charge method, the processor 130 may control the first switch 120-1 such that the first battery 110-1 and the external charger 200 are connected.

For this, while the second battery 110-2 is being charged by the external charger 200, the processor 130 may receive SOC information from the second battery 110-2, and determine the SOC of the second battery 110-2. Then, based on the SOC information received from the second battery 110-2, if it is determined that the SOC of the second battery 110-2 is the predetermined SOC, the processor 130 may control the first switch 120-1 such that the first battery 110-1 and the external charger 200 are connected.

Alternatively, the external charger 200 may charge the second battery 110-2 to the predetermined SOC by the CC charge method, and when the charge by the CC charge method is completed, the external charger 200 may transmit a CC charge completion signal to the processor 130 through the interface of the charge unit (not shown). In this case, when the CC charge completion signal is received from the external charger 200, the processor 130 may control the first switch 120-1 such that the first battery 110-1 and the external charger 200 are connected.

When the first switch 120-1 is switched to the first battery 110-1 according to control by the processor 130, the first battery 110-1 may be connected with the external charger 200, and may be charged by a CV charge method.

Then, when the first battery 110-1 is fully charged by the CV charge method, the processor 130 may control the first switch 120-1 such that the second battery 110-2 and the external charger 200 are connected. In this case, the second battery 110-2 may be connected with the external charger 200, and may be charged by the CV charge method.

As described above, according to the disclosure, when the first battery 110-1 is charged by the CC charge method, the first switch 120-1 may be controlled such that the second battery 110-2 and the external charger 200 are connected, and the second battery 110-2 may be charged by the CC charge method. Accordingly, compared with a case of fully charging the first battery 110-1 by the CC charge method and the CV charge method, and then connecting the second battery 110-2 to the external charger 200, the disclosure can charge a great capacity in the first and second batteries 110-1, 120-2 within a short time.

Meanwhile, in FIG. 2, two batteries were illustrated, but this is merely an example, and the number of the batteries may be three or more depending on embodiments. The technical idea of the disclosure is also applied to this case, and it can be deemed that the three or more batteries can be individually charged.

After the connection with the external charger 200 is disconnected, if a difference in the SOCs among the plurality of batteries reaches a threshold according to the operation of the robot 100, the second switch 120-2 may be controlled such that a battery having a high SOC among the plurality of batteries charges a battery having a low SOC.

Here, the operation of the robot 100 may be gripping and carrying of an object through the robot hand, moving of the robot 100, etc., but is not necessarily limited thereto.

Also, the threshold may be, for example, 30%, but it may be set as various values according to a user input.

In particular, the threshold may be set based on an overcurrent protection function of the battery. Specifically, in case a current having a size greater than or equal to a predetermined value (or, an overcurrent protection value) flows, each battery included in the robot 100 may perform an overcurrent protection function. Here, the overcurrent protection function is a function by the battery manage system of blocking a current in case a current having a size greater than or equal to the overcurrent protection value flows, for preventing damage to the protection circuit, etc. of the battery as an overcurrent flows in the battery, and the threshold according to the disclosure may be set such that the size of the current flowing from the battery having a high SOC to the battery having a low SOC is a size smaller than the overcurrent protection value. As an example, if the overcurrent protection value is K(A), the threshold may be set such that the size of the current flowing from the battery having a high SOC to the battery having a low SOC is smaller than K(A).

For this, the processor 130 may receive SOC information from the plurality of batteries while the robot 100 is operating, and determine the difference in the respective SOCs of the plurality of batteries based on the SOC information of each battery.

As an example, in case the first battery 110-1 is a battery for operating the system of the robot 100, and the second battery 110-2 is a battery for operating the manipulation unit of the robot 100, the consumption amount of the first battery 110-1 and the consumption amount of the second battery 110-2 may be different when the robot 100 is operated. In particular, in case the operation of the robot 100 is carrying of a heavy object, the consumption amount of the second battery 110-2 connected to the motor of the manipulation unit will be bigger than that of the first battery 110-1 for operating the system of the robot 100, and accordingly, the difference between the SOC of the first battery 110-1 and the SOC of the second battery 110-2 on one point may be the threshold.

As described above, when the difference between the SOC of the first battery 110-1 and the SOC of the second battery 110-2 reaches the threshold according to the operation of the robot 100, the processor 130 may control the second switch 120-2 in an open state to a short-circuited state.

In this case, electric energy charged in the first battery 110-1 having a high SOC may be supplied to the second battery 110-2 having a low SOC.

Specifically, when the difference between the SOC of the first battery 110-1 and the SOC of the second battery 110-2 reaches the threshold, the processor 130 may control the second switch 120-2 in an open state to a short-circuited state, and transmit a signal requesting supply of electric energy to the first battery 110-1. In this case, the battery manage system of the first battery 110-1 may charge the second battery 110-2 by supplying electric energy to the second battery 110-2 connected through the second switch 120-2.

Alternatively, the battery manage system of the first battery 110-1 having a high SOC may determine whether the second switch 120-2 was short-circuited, and if it is determined that the second switch 120-2 in an open state was short-circuited according to control by the processor 130, the battery manage system may charge the second battery 110-2 by supplying electric energy to the second battery 110-2. For this, the battery manage system of the first battery 110-1 may monitor a voltage (or, a current) applied to the terminal of the first battery 110-1 connected with the second switch 120-2, detect a change in the voltage (or, the current) that occurs according to switching of the second switch 120-2, and if a change in the voltage (or, the current) is detected, the battery manage system may determine that the second switch 120-2 in an open state was short-circuited.

Afterwards, when the difference in the SOCs of the plurality of batteries reaches a predetermined value as the battery having a high SOC among the plurality of batteries charges the battery having a low SOC, the processor 130 may control the second switch 120-2 to disconnect the connection among the plurality of batteries.

Here, the predetermined value may be, for example, 10%, but this may be set as various values according to a user input. Accordingly, the disclosure can prevent overcharge of the second battery 110-2, and can thereby prevent dangers such as damage, explosion, etc. of the second battery 110-2.

As described above, according to the disclosure, the battery having a low SOC can be charged by the battery having a high SOC while the robot 100 is operating. Accordingly, the time point when some batteries among the plurality of batteries are discharged can be delayed, and ultimately, the operation time of the robot 100 can be increased.

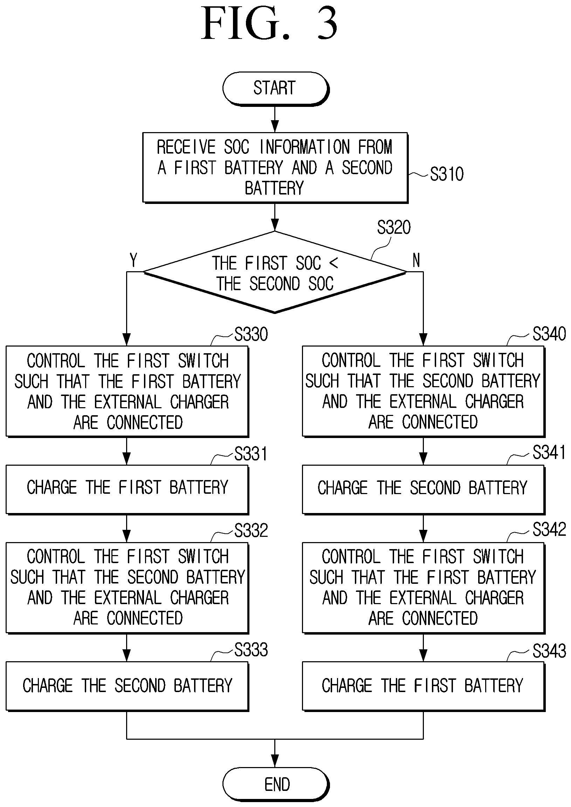

FIG. 3 is a flow chart for illustrating an embodiment of charging electric energy supplied from an external charger to a plurality of batteries according to an embodiment of the disclosure. Hereinafter, explanation will be described by omitting or abridging parts that overlap with the aforementioned explanation.

The processor 130 may detect connection between the charge unit (not shown) of the robot 100 and the external charger 200. Specifically, when a charge detection signal that was generated by the charge unit (not shown) is received from the charge unit (not shown) as the external charger 200 is connected to the charge unit (not shown) of the robot 100, the processor 130 may determine that the charge unit (not shown) of the robot 100 and the external charger 200 are connected.

Then, the processor 130 may receive SOC information of each battery from the plurality of batteries. As an example, the processor 130 may receive SOC information from the first battery and the second battery in operation S310. Meanwhile, the SOC information may not only be received from each battery after connection with the external charger 200 is detected, but it may also be received from each battery before the external charger 200 is connected.

Based on the SOC information received from each battery, the processor 130 may determine a battery having a relatively high SOC and a battery having a relatively low SOC among the plurality of batteries. Then, the processor 130 may control the first switch 120-1 such that the battery having a low SOC is charged first.

As an example, in case a first SOC which is the SOC of the first battery 110-1 and a second SOC which is the SOC of the second battery 110-2 are received, the processor 130 may compare the sizes of the first SOC and the second SOC in operation S320.

Then, if it is determined that the first SOC is smaller than the second SOC, the processor 130 may control the first switch 120-1 such that the first battery 110-1 and the external charger 200 are connected in operation S330.

Accordingly, the first battery 110-1 may be charged by the external charger 200 in operation S331.

Afterwards, the processor 130 may control the first switch 120-1 such that the second battery 110-2 and the external charger 200 are connected in operation S332.

Specifically, when the first battery 110-1 is charged as much as a predetermined capacity by the CC charge method, the processor 130 may control the first switch 120-1 such that the second battery 110-2 and the external charger 200 are connected. However, this is merely an example, and it can be deemed that, when the first battery 110-1 is fully charged by the CC charge method and the CV charge method, the processor 130 may control the first switch 120-1 such that the second battery 110-2 and the external charger 200 are connected.

Accordingly, the second battery 110-2 may be charged by the external charger 200 in operation S333.

Meanwhile, although not illustrated in FIG. 3, the control method may further include the step wherein, when the first battery 110-1 is charged as much as the predetermined capacity by the CC charge method, the processor 130 controls the first switch 120-1 such that the second battery 110-2 and the external charger 200 are connected, and afterwards, when the second battery 110-2 is charged as much as the predetermined capacity by the CC charge method, the processor 130 controls the first switch 120-1 such that the first battery 110-1 and the external charger 200 are connected.

In addition, the control method may further include the step wherein, when the first battery 110-1 is fully charged by the CV charge method afterwards, the processor 130 controls the first switch 120-1 such that the second battery 110-2 and the external charger 200 are connected, and fully charges the second battery 110-2 by the CV charge method.

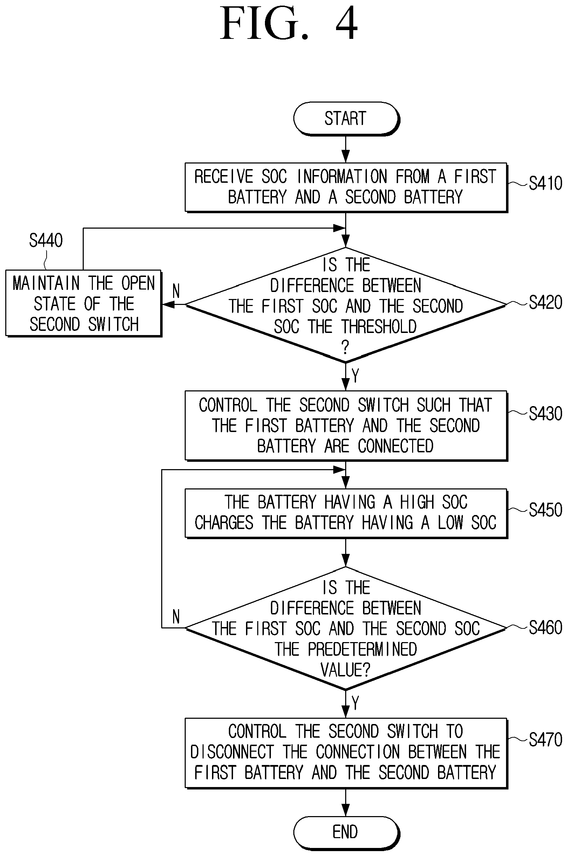

FIG. 4 is a flow chart for illustrating an embodiment wherein some batteries among a plurality of batteries charge some other batteries according to an embodiment of the disclosure.

After the connection with the external charger 200 is disconnected, the processor 130 may receive SOC information of each battery from the plurality of batteries while the robot 100 is operating. As an example, the processor 130 may receive SOC information from the first battery 110-1 and the second battery 110-2 in operation S410.

Then, the processor 130 may determine a difference in the SOCs based on the SOC information received from each battery. As an example, the processor 130 may determine whether a difference between the first SOC which is the SOC of the first battery 110-1 and the second SOC which is the SOC of the second battery 110-2 is a threshold (or, greater than or equal to the threshold) in operation S420.

If it is determined that the difference between the first SOC and the second SOC is the threshold, the processor 130 may control the second switch 120-2 such that the first battery 110-1 and the second battery 110-2 are connected in operation S430. That is, the processor 130 may short the second switch 120-2 in an open state.

Accordingly, the battery having a relatively high SOC may charge the battery having a relatively low SOC in operation S450.

Meanwhile, if it is determined that the difference between the first SOC and the second SOC is smaller than the threshold, the processor 130 may maintain the second switch 120-2 in an open state as it is in operation S440.

While the battery having a relatively high SOC is charging the battery having a relatively low SOC, the processor 130 may receive SOC information from each battery, and determine whether the difference between the first SOC and the second SOC is a predetermined value based on the information in operation S460.

Then, if it is determined that the difference between the first SOC and the second SOC is the predetermined value, the processor 130 may control the second switch 120-2 to disconnect the connection between the first battery 110-1 and the second battery 110-2 in operation S470. That is, the processor 130 may open the second switch 120-2.

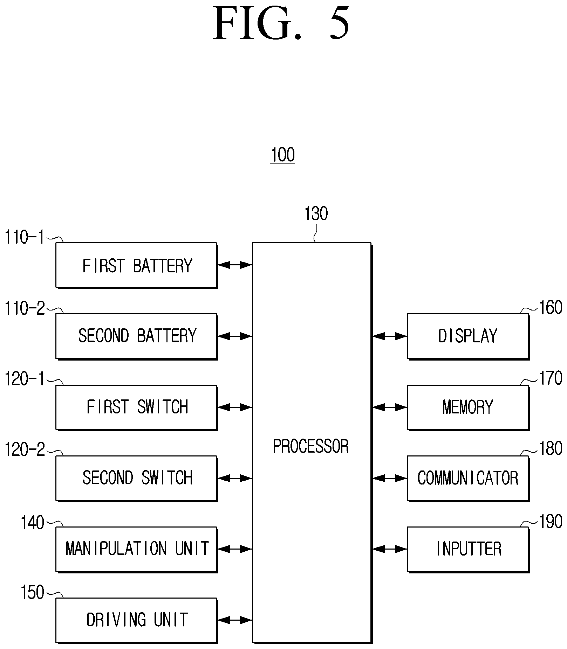

FIG. 5 is a detailed block diagram for illustrating a robot according to an embodiment of the disclosure.

Referring to FIG. 5, the robot 100 according to an embodiment of the disclosure may include a plurality of batteries (e.g., the first battery 110-1, the second battery 110-2), a plurality of switches (e.g., the first switch 120-1, the second switch 120-2), a manipulation unit 140, a driving unit 150, a display 160, a memory 170, a communicator 180, an inputter 190, and a processor 130. Hereinafter, explanation will be described by omitting or abridging parts that overlap with the aforementioned explanation.

The manipulation unit 140 is a component including, for example, a robot arm, a robot hand, and robot fingers, and here, one end of the robot arm may be connected to the body part of the robot 100, and the other end of the robot arm may be connected to the robot hand. Also, the robot hand may be connected to the robot fingers, and the robot fingers may be implemented as a plurality of fingers.

The manipulation unit 140 of the disclosure may further include a micro controller unit (MCU) and a plurality of motors. Here, the motors include a motor for controlling the robot arm, a motor for controlling the robot hand, and a motor for controlling the robot fingers, and each of the plurality of motors may be electrically connected to the MCU and some batteries among the plurality of batteries in the disclosure.

In addition, the MCU may be electrically connected to the processor 130 in the body part, and operate at least one of the plurality of motors based on a control signal received from the processor 130. As an example, if a signal for controlling the movement of the robot arm is received from the processor 130, the MCU may output an operation signal to the motor connected with the robot arm, and thereby control the movement of the robot arm.

Meanwhile, such an MCU may be included in the robot arm, but is not necessarily limited thereto, and the MCU may also be included in the robot hand.

Also, the aforementioned motor may be a DC motor, but is not necessarily limited thereto, and the motor may be implemented as various motors that can generate a rotation force such as a step motor or an RC servo motor, etc.

The driving unit 150 may be connected to the bottom end of the body part of the robot 100, and control the movement of the robot 100.

The driving unit 150 of the disclosure may include an operation unit (not shown) implemented as a wheel or a robot leg, a motor (not shown), and an MCU (not shown), and the processor 130 may transmit a control signal for moving the robot 100 to the MCU (not shown) of the driving unit 150. In this case, the MCU (not shown) of the driving unit 150 may output an operation signal to the motor (not shown) connected to the operation unit (not shown) according to the control signal, and thereby move the robot 100.

The display 160 may display various screens. For example, the display 160 may display SOC information of the plurality of batteries included in the robot 100, information indicating that some batteries among the plurality of batteries are being charged by the external charger 200, or information indicating that some batteries among the plurality of batteries are being charged by some other batteries, etc.

The display 160 as above may be implemented as displays in various forms such as a liquid crystal display (LCD) panel, light emitting diodes (LED), organic light emitting diodes (OLED), liquid crystal on silicon (LCoS), digital light processing (DLP), etc. Also, inside the display 160, operation circuits that may be implemented in forms such as an a-si TFT, a low temperature poly silicon (LTPS) TFT, an organic TFT (OTFT), etc., a backlight unit, etc. may also be included together.

Further, the display 160 may be combined with a touch detection unit, and implemented as a touch screen.

The memory 170 may store an operating system (OS) for controlling the overall operations of the components of the robot 100, and instructions or data related to the components of the robot 100.

Accordingly, the processor 130 may control a plurality of hardware or software components of the robot 100 by using various instructions or data, etc. stored in the memory 170, and load instructions or data received from at least one of other components on a volatile memory and process them, and store various data in a non-volatile memory.

In particular, the memory 170 may store information on a threshold for short-circuiting of the second switch 120-2. Accordingly, if it is determined that the difference in the SOCs among the plurality of batteries is the threshold stored in the memory 170, the processor 130 may short-circuit the second switch 120-2, and charge the battery having a low SOC through the battery having a high SOC among the plurality of batteries.

The communicator 180 may communicate with an external device and transmit and receive various data. For example, the communicator 180 may not only perform communication with an electronic device through a local area network (LAN), an Internet network, and a mobile communication network, but also perform communication with an electronic device through various communication methods such as Bluetooth (BT), Bluetooth low energy (BLE), wireless fidelity (WI-FI), Zigbee, NFC, etc.

For this, the communicator 180 may include various communication modules for performing network communication. For example, the communicator 180 may include a Bluetooth chip, a Wi-Fi chip, a wireless communication chip, etc.

The inputter 190 may receive input of various user instructions. The processor 130 may perform various functions according to user instructions input through the inputter 190.

For this, the inputter 190 may be implemented as an input panel. The input panel may be implemented in a key pad or touch screen type including a touch pad or various kinds of function keys, number keys, special keys, character keys, etc.

Meanwhile, the aforementioned components are merely an example, and the robot 100 may further include components such as a sensor, etc. Here, the sensor may be a sensor for measuring distance such as an infrared sensor, a LiDAR sensor, or an ultrasonic sensor, etc., but is not necessarily limited thereto.

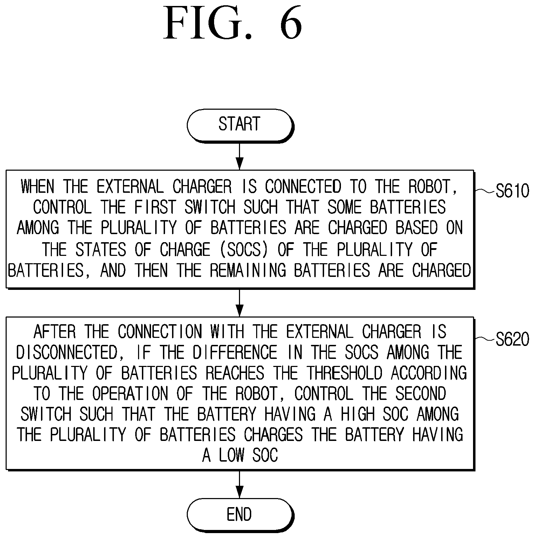

FIG. 6 is a flow chart for illustrating a control method for a robot according to an embodiment of the disclosure.

When the external charger 200 is connected to the robot 100, the robot 100 may control the first switch 120-1 such that some batteries among the plurality of batteries are charged on the basis of the states of charge (SOCs) of the plurality of batteries, and then the remaining batteries are charged in operation S610.

For this, the robot 100 may receive SOC information of each battery from the plurality of batteries, and determine a first battery and a second battery having a relatively low SOC and a second battery having a relatively high SOC among the plurality of batteries based on the SOC information.

Then, when the first battery is charged to a predetermined SOC by a CC charge method, the robot 100 may control the first switch 120-1 such that the second battery and the external charger 200 are connected.

Then, when the second battery is charged to the predetermined SOC by the CC charge method, the robot 100 may control the first switch 120-1 such that the first battery and the external charger 200 are connected, and charge the first battery 110-1 by a CV charge method.

Afterwards, when the first battery 110-1 is fully charged by the CV charge method, the robot 100 may control the first switch 120-1 such that the second battery 110-2 and the external charger 200 are connected, and fully charge the second battery 110-2 by the CV charge method.

Meanwhile, after the connection with the external charger 200 is disconnected, if a difference in the SOCs among the plurality of batteries reaches a threshold according to the operation of the robot 100, the robot 100 may control the second switch 120-2 such that the battery having a high SOC among the plurality of batteries charges the battery having a low SOC in operation S620.

For this, while the robot 100 is operating, the robot 100 may receive SOC information from the plurality of batteries, and determine the difference in the SOCs of the plurality of batteries based on the SOC information.

Then, when the difference in the SOCs of the plurality of batteries reaches a predetermined value as the battery having a high SOC among the plurality of batteries charges the battery having a low SOC, the robot 100 may control the second switch 120-2 to disconnect the connection among the plurality of batteries. That is, the robot 100 may open the second switch 120-2 in a shorted state.

Meanwhile, the methods according to the aforementioned various embodiments of the disclosure may be implemented in forms of software or applications that can be installed on conventional robots.

Also, the methods according to the aforementioned various embodiments of the disclosure may be implemented just with software upgrade, or hardware upgrade of conventional robots.

Meanwhile, a non-transitory computer readable medium storing a program that sequentially performs the control method for a robot according to the disclosure may be provided.

A non-transitory computer readable medium refers to a medium that stores data semi-permanently, and is readable by machines, but not a medium that stores data for a short moment such as a register, a cache, and a memory. Specifically, the aforementioned various applications or programs may be provided while being stored in a non-transitory computer readable medium such as a CD, a DVD, a hard disk, a blue-ray disk, a USB, a memory card, a ROM and the like.

Also, while preferred embodiments of the disclosure have been shown and described, the disclosure is not limited to the aforementioned specific embodiments, and it is apparent that various modifications may be made by those having ordinary skill in the technical field to which the disclosure belongs. Further, it is intended that such modifications are not to be interpreted independently from the technical idea or prospect of the disclosure.

## Claims

1. A robot comprising:
a plurality of batteries;
a first switch configured to individually supply electric energy provided from an external charger to the plurality of batteries;
a second switch configured to connect the plurality of batteries; and
a processor configured to:
based on the external charger being connected to the robot, control the first switch such that some batteries among the plurality of batteries are charged based on the states of charge (SOCs) of the plurality of batteries, and then the remaining batteries are charged, and
after the connection with the external charger is disconnected, based on a difference in the SOCs among the plurality of batteries reaching a threshold according to the operation of the robot, control the second switch such that a battery having a high SOC among the plurality of batteries charges a battery having a low SOC.

2. The robot of claim 1,
wherein the processor is configured to:
receive SOC information of each battery from the plurality of batteries, and based on the SOC information, control the first switch such that a first battery and the external charger are connected in order to first charge the first battery having a low SOC among the plurality of batteries, and after the first battery is charged, control the first switch such that a second battery and the external charger are connected in order to charge the second battery having a higher SOC than the first battery.

3. The robot of claim 2,
wherein the processor is configured to:
based on the first battery being charged to a predetermined SOC by a constant current (CC) charge method, control the first switch such that the second battery and the external charger are connected.

4. The robot of claim 3,
wherein the processor is configured to:
based on the second battery being charged to the predetermined SOC by the CC charge method, control the first switch such that the first battery and the external charger are connected, and charge the first battery through a constant voltage (CV) charge method, and
based on the first battery being fully charged by the CV charge method, control the first switch such that the second battery and the external charger are connected, and fully charge the second battery by the CV charge method.

5. The robot of claim 1,
wherein the processor is configured to:
while the robot is operating, receive SOC information from the plurality of batteries, and determine the difference in the SOCs of the plurality of batteries based on the SOC information.

6. The robot of claim 1,
wherein the processor is configured to:
based on the difference in the SOCs of the plurality of batteries reaching a predetermined value as the battery having a high SOC among the plurality of batteries charges the battery having a low SOC, control the second switch to disconnect the connection among the plurality of batteries.

7. The robot of claim 1,
wherein, based on a current of a size greater than or equal to a predetermined value flowing, the plurality of batteries perform an overcurrent protection function, and
wherein the threshold is set for the robot such that the size of the current flowing from the battery having a high SOC to the battery having a low SOC is a size smaller than the predetermined value.

8. The robot of claim 1,
wherein some batteries among the plurality of batteries are batteries for supplying electric energy to a motor of the robot, and the remaining batteries are batteries for supplying electric energy to the processor.

9. A control method for a robot, the control method comprising:
based on an external charger being connected to the robot, controlling the first switch such that some batteries among the plurality of batteries are charged on the basis of the states of charge (SOCs) of the plurality of batteries, and then the remaining batteries are charged; and
after the connection with the external charger is disconnected, based on a difference in the SOCs among the plurality of batteries reaching a threshold according to the operation of the robot, controlling the second switch such that a battery having a high SOC among the plurality of batteries charges a battery having a low SOC.

10. The control method of claim 9,
wherein the controlling the first switch comprises:
receiving SOC information of each battery from the plurality of batteries, and based on the SOC information, controlling the first switch such that a first battery and the external charger are connected in order to first charge the first battery having a low SOC among the plurality of batteries, and after the first battery is charged, controlling the first switch such that a second battery and the external charger are connected in order to charge the second battery having a higher SOC than the first battery.

11. The control method for a robot of claim 10,
wherein the controlling the first switch comprises:
based on the first battery being charged to a predetermined SOC by a constant current (CC) charge method, controlling the first switch such that the second battery and the external charger are connected.

12. The control method for a robot of claim 11,
wherein the controlling the first switch comprises:
based on the second battery being charged to the predetermined SOC by the CC charge method, controlling the first switch such that the first battery and the external charger are connected, and charging the first battery by a constant voltage (CV) charge method, and
based on the first battery being fully charged by the CV charge method, controlling the first switch such that the second battery and the external charger are connected, and fully charging the second battery by the CV charge method.

13. The control method for a robot of claim 9, further comprising:
while the robot is operating, receiving SOC information from the plurality of batteries, and determining the difference in the SOCs of the plurality of batteries based on the SOC information.

14. The control method for a robot of claim 9,
wherein the controlling the second switch comprises:
based on the difference in the SOCs of the plurality of batteries reaching a predetermined value as the battery having a high SOC among the plurality of batteries charges the battery having a low SOC, controlling the second switch to disconnect the connection among the plurality of batteries.

15. The control method for a robot of claim 9,
wherein, based on a current of a size greater than or equal to a predetermined value flowing, the plurality of batteries perform an overcurrent protection function, and
wherein the threshold is set for the robot such that the size of the current flowing from the battery having a high SOC to the battery having a low SOC is a size smaller than the predetermined value.
